# EUROPEAN PATENT APPLICATION

(11) **EP 4 293 973 A1**
(43) Date of publication of application: **20.12.2023**
(21) Application number: 22179012.4
(22) Date of filing: 14.06.2022
(51) Int. Cl.: H04L 41/0806

(54) **METHOD AND CONTROLLER FOR CONFIGURING NODES IN A, PARTICULARLY INDUSTRIAL, NETWORK AND RESPECTIVE NODE**

(71) Applicant: Siemens Aktiengesellschaft, 80333 München (DE)
(72) Inventor: Kulkarni, Vivek, 82008 Unterhaching (DE); Zirkler, Andreas, 85521 Ottobrunn (DE)
(74) Representative: Siemens Patent Attorneys

(57) **Abstract**

The embodiments described herein relate to techniques for configuring nodes in a network, particularly an industrial network, by at least one controller, the method including the steps of. With the techniques covered by the embodiments edge apps get empowered to interact with the edge-orchestrator which has deployed them. This enables use cases, where the requirements of an app change during operation, e.g., when agent-based apps take over additional tasks, or when properties of an app get changed, e.g., reconfigured, during runtime. Additionally, it empowers app to report any kind of issues to the edge-orchestrator, which enables the edge-orchestrator to react on the issues in time, e.g., to make use of redundancies available in the edge environment and redeploy the app to an edge-device with more (available) computational power or with a better network connection. Hence the current monolithic and rigid instantiation of, particularly industrial, edge apps is transformed into a more dynamic and self-adjusting runtime environment.

## Description

### TECHNICAL FIELD OF THE INVENTION

The present invention relates to a controller and an automated method, preferably a computer-implemented method, for managing, especially resource demands of, at least a first application instantiated in the art of edge computing in connection with a first container, on a first edge-device in a, particularly industrial, network, comprising at least partly edge network entities, at least an edge-orchestrator and said first edge-device.

### BACKGROUND OF THE INVENTION

Edge computing, edge, is a well-known approach in the art of information technology, IT, that is especially known for enabling the so-called internet of things-, IoT-, concept. Edge computing is an IT design approach architecture concept which makes use of established network components and does not involve any new technologies in the design approach but rather is understood as a data processing model that analyzes and processes data generated by the provision of decentralized IT resources directly at the point of origin, for example at the edge of the network periphery.

It can also be used as a complementary solution and concept to central concepts such as the cloud, so that even future concepts in the field of IoT can be realized.

Currently edge is implemented preferably at least in parts of existing networks, especially in industrial networks. A typical application of such implementation in edge-equipped industrial networks is a user device, which is often realized as a mobile device, running applications that are communieating with edge entities of the industrial network. Such a user device, especially when realized as mobile devices, can be used for said purpose to access and process data at any point of origin.

Said edge-applications, which are run on user devices, especially in connection with industrial networks, are on one hand subject to special requirements, for example advanced security measures to make sure that no unauthorized third party has access to data of the network or advanced measures to reduce latency. Therefore, they are built in such a manner that they support this special, sometimes proprietary needs. On the hand, they are also expected to fit users' needs and/or the needs of the user devices it is intended to be installed. Because of this and specially to keep security measures secret as possible, the applications are expected to be programmable without proprietary know how needed.

To meet these requirements and expectations edge introduces so called containers. Under edge containers decentralized computing resources are understood, which are located as close as possible to the end user, for example to reduce latency, save bandwidth, and enhance the overall digital experience. They are designed in such a manner, that the allow you to package application code, dependencies, and configurations into a single object so that the edge models can be deployed easily on different devices. Applications provided this manner are called containerized applications.

For automated configuration, management, and coordination of computer systems, applications, and services the so-called orchestration is known. To manage these containers and services edge provides for the process of so-called container orchestration. It is a process intended for managing and organizing multiple containers and microservices architecture at scale.

Instances of these containerized applications can be and are distributed at a large scale.

At the time, container orchestration is only possible for defined resources at the time of container instantiation.

Orchestration is particularly known as the automated configuration, management, and coordination of computer systems, applications, and services. Orchestration helps IT to manage complex tasks and workflows more easily.

Changes of the resource demand (e.g., compute and network resources, high availability requirements, etc.) might be requested from a so-called edge-orchestrator.

An edge-orchestrator is a further process, the edge model provides for, that enables the deployment and configuration of instances of containerized applications that run on geographically distributed edge-devices, for example said user devices, which are connected via, especially an industrial-, network.

However, said request can only be set up at the plane of an edge entity that needs to initiate said changes. If the demand to change resources originates at another plane, this first must be detected and/or reach plane of the edge entity. This rigid approach might lead to drawbacks like delays or other distortions.

### SUMMARY OF THE INVENTION

The objective of the present invention is to provide a solution for improving, in particular industrial, networks using edge computing.

To accomplish the objective, the present invention provides a solution according to the independent claims.

Advantageous embodiments are provided in the dependent claims.

In one embodiment a method is disclosed for configuring nodes in a network, particularly an industrial network, by at least one controller, the method including the steps of:
- operating at least a part of said plurality of nodes in the network by a network management service, the network management service comprising an information and/or management model at least partly in compliance with the edge computing model, the network management service exchanging first configuration messages with the plurality of nodes; and
- configuring end-devices and/or applications on said end-devices instantiated according to said edge computing model at least amongst said part of nodes in the, particularly industrial, network by an edge-orchestrator service according to said edge computing model, the edge-orchestrator service exchanging second configuration messages with the plurality of nodes; and
- at least one of said applications being implemented and instantiated according to said edge computing model as a first application on a first end-device of the end-devices in such a manner that it interacts with the first end-device that it at least effects building, directly addressing and/or sending a message to said edge-orchestrator service, whereby said message is built in such a manner that at least a first message part is incorporated, whereby first message part comprises at least one information that is uniquely correlated with the first application; and
- sending and proceeding of the message to said edge-orchestrator; and
- said edge-orchestrator service processing the message in such a manner that a subsequent action in connection with the first application is taken.

By building and sending a first message part to said edge-orchestrator the application itself could be identified by the edge-orchestrator as the at least one information uniquely correlates with the application. Hence, the application is independent from the edge-device, it is instantiated on, concerning its identification before the edge-orchestrator service and can directly communicate with the edge-orchestrator service.

According to an embodiment a second message part is incorporated being at least a first control message. With this the application is able to signalize the kind of service, i.e., if said subsequent action is for example an adjustment of resources it needs or said subsequent action is to extract reports, like reporting of events, status and/or parameter, which the edge-orchestrator service might need for operating the edge-devices and/or edge-applications.

According to an embodiment said subsequent action being triggered by said processing of the message. Hence, the applications itself are able to initiate subsequent actions orchestrated by the edge-orchestrator.

According to an embodiment said first control message being built as a request for resource adaption. That enables the application to build messages according to the conventions of communication protocols appropriate for a request for resource adaption of the edge-orchestrator service.

According to an embodiment said first control message being built as a report, especially of a status, updates of at least one parameter and/or an event, provided from the first application. That enables the application to build messages according to the conventions of communication protocols appropriate for a report to the edge-orchestrator service.

According to an embodiment the at least one information that is uniquely correlated, comprises a combination of two of:
- an IP address or a MAC address of the edge-device the application is instantiated on or any other information that is uniquely related to the edge-device the application is instantiated on,
- the W3C Thing Description of the application or any other information piece that is uniquely related to the type of the application.

With that for any node being operated as an edge-device comprising an instance of an application a unique combination can be generated, enabling the edge-orchestrator to derive unique IDs for any instance of an edge-applications within the network.

According to an embodiment whereby from said information a unique ID for the first application is derived in such a manner that the subsequent action, especially adjusting resources for or extraction reports related to the first application, is processed using the ID.

According to an embodiment upon instantiation of the first application an ID unique within the network is generated and the application is provided with it in such a manner that the first application is subsequently able to incorporate the ID as the first information.

With that, the first application knows its ID right from the beginning of its instantiation, so that no derivation of an ID is needed but rather said first message incorporates the ID given at the time of instantiation.

According to an embodiment the edge-orchestrator or edge-device generates and provides said ID.

As the edge-orchestrator is usually operating the part of the nodes building the part of the network operated according to the edge computing model, this approach is most in line with the edge computing model according to the state of the art as the edge-orchestrator is the edge entity that is responsible for operation the edge-devices.

At the time of instantiation, it usually has at least most of the information needed to generate such an ID straightaway.

According to an embodiment said subsequent action comprises at least the edge-orchestrator service sending a message in such a manner that the first application is subsequently able to incorporate the ID as the first information when building further messages.

With that the first application is upon receipt of the ID able to identify itself with the ID provided.

According to an embodiment at least one of said plurality of nodes is at least temporarily operated, particularly based on at least one said first configuration messages, as one of said edge-devices and/or as an edge-orchestrator.

That means any one of the nodes can be operated as an edge-device and/or edge-orchestrator at any time.

According to an embodiment operating the nodes includes establishing the edge computing model based network configuration and/or modifying the edge computing model based network configuration during a runtime of the network management service, particularly based on said second configuration messages.

That means any one of the nodes can be configured as an edge-device and/or edge-orchestrator at any time making it able to operate them accordingly.

According to an embodiment the network, in particular industrial network, is operated by one of
- a fully distributed configuration;
- a centralized network distributed user configuration; and
- a fully centralized configuration;
as specified in IEEE 802.1Qcc.

According to an embodiment a controller for configuring nodes in a network, in particular an industrial network, the controller including at least one of:
- a network management service module operating at least a part of said plurality of nodes in the network by, the network management service module comprising an information and/or management model at least partly in compliance with the edge computing model, the network management service module exchanging first configuration messages with the plurality of nodes; and
- a configuration module configuring end-devices and/or applications on said end-devices instantiated according to said edge computing model at least amongst said part of nodes in the, particularly industrial, network by an edge-orchestrator service module according to said edge computing model, the edge-orchestrator service module exchanging second configuration messages with the plurality of nodes.

According to an embodiment a network node in a network, particularly an industrial network, is disclosed, the node being controllable by at least one network controller according to the foregoing paragraph, the node being built and operated according to the method embodiments according to the method related embodiments above, particularly including one of:
- an end-device module for building and sending messages to said edge-orchestrator service module, which are at least incorporating said information, the end-device module implementing at least one of said applications and instantiating according to said edge computing model as a first application on the first end-device of the end-devices in such a manner that it interacts with the first end-device module that it at least effects building, directly addressing and/or sending a message to said edge-orchestrator service module, whereby said message is built in such a manner that at least a first message part is incorporated, whereby first message part comprises at least one information that is uniquely correlated with the first application; said end-device module sending and proceeding of the message to said edge-orchestrator service module;
- an edge-orchestrator service module processing the message in such a manner that a subsequent action in connection with the first application is taken.

The advantages and preferred embodiments set forth above with respect to the method can thereby be applied mutatis mutandis to the modules according to the invention and their preferred embodiments resulting with the embodiments of the encompassed arrangement.

Further benefits and advantages of the present invention will become apparent after a careful reading of the detailed description with appropriate reference to the accompanying drawings.

### BRIEF DESCRIPTION OF THE DRAWINGS

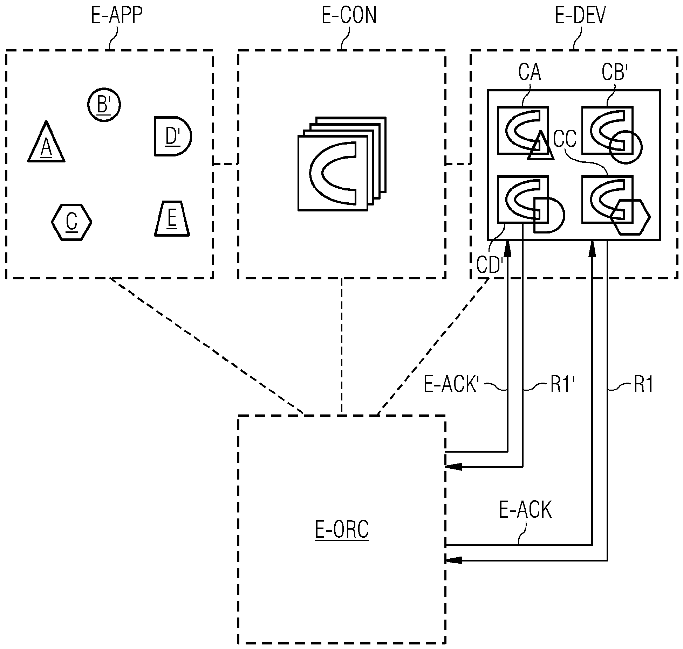

The objects as well as further advantages of the present embodiments will become more apparent and readily appreciated from the following description of the preferred embodiments, taken in conjunction with the accompanying drawing in which the FIG shows a schematic depiction of an exemplary inventive arrangement and process in a network under concern, i.e., a, particularly industrial, network incorporating edge-devices and edge processes.

### DETAILED DESCRIPTION OF THE INVENTION

As an embodiment of the invention the FIG shows a schematic depiction of an exemplary inventive arrangement and process in a network under concern, i.e., an industrial network incorporating edge-devices and edge processes and/or derivatives thereof at least in parts of the network.

The depiction discloses in a very general manner the main entities at a point of presence of said industrial network that are affected by the invention respectively which benefit from the modifications of both the edge process and participating edge-devices according to the embodiment of the invention described herein.

Modification in connection with this embodiment means that according to the embodiment the arrangements are equipped and functioning in such a manner that they can provide both the management of resources of edge apps according to the state of the art mentioned above and in parallel as an alternative management of resources in a manner characterized by the embodiment of the invention.

It should be noted that the invention is not limited to this modification. According to other embodiments of the invention it is also possible that the alternative management according to the invention is applied homogenous, that is on all edge arrangements and processes or derivatives of both which are having the same management of resources of instantiated apps as the edge system according to the prior art that is stated above.

What can be seen on the left side of the drawing is a group of applications A, B', C, D', E, which are intended to be used as edge-applications building a group of instantiable edge-applications E-APP.

Two of these edge-applications B', D' are edge-applications with modifications according to the embodiment of the invention, for the purpose of distinction characterized with at least partially round shapes, that are modified according to the embodiment of the inventions, whereas the edge apps having angular shapes are edge-applications according to the state of the art, i.e., edge-applications A, C, E.

Any edge-applications A, B', C, D', E can be instantiated in a manner known from the edge computing model according to the state of the art, i.e., they have to be containerized before they can be used, i.e., instantiated on an edge-device, like the one depicted on the right side of the FIG. This well-known edge process is schematically depicted by the edge-container E-CON drawn and incorporating several containers in between the edge-applications group E-APP and the edge-device E-DEV.

Out of the group of edge-applications E-APP the edge-device is capable to instantiate any of the containerized edge-applications offered in the group of edge-applications E-APP.

The modified edge-applications B', D' according to the embodiment of the invention is capable of both, being managed by an edge-orchestrator E-ORC upon request of an edge-device and being managed according to the invention.

The modified edge-applications B', D' are not limited to being capable of both alternatives. It could also be limited to the management approach according to the invention. However, the invention is, i.e., the edge arrangements and processes according to the invention are, that flexible that for the sake of compatibility the resource management approach known from the edge computing model according to the state of the art stated above as well as approaches according to other models can coexist, i.e., can be chosen according to the present demands.

Said flexibility is upon other features of the invention given due to the fact that the invention introduces an interface, which could be labeled as an "intent interface", that allows an, especially industrial, edge app E-APP to directly request resources from an edge-orchestrator E-ORC or to report incidents to an edge-orchestrator E-ORC.

For the implementation of this interface according to the invention at least the following embodiments of the invention manage to achieve this:
According to a first embodiment, when an edge app E-APP is modified and instantiated according to the invention, the instantiated edge app CC', CB' is provided with its own orchestration identification ID, so that it can identify itself at any later point in time.

This embodiment has the advantage, that deployment of multiple instances of the same app CB', CD' on the same device E-DEV would become possible.

Multiple instances of the same edge app are not allowed according to the edge computing model known from the state of the art. The embodiment therefore overcomes the problem in connection with the approach according to the state of the art that it would not be possible, not even for the edge-orchestrator E-ORC, to distinguish the different instances.

However, to achieve this advantage the embodiment results in breaking the compatibility with brownfield apps, as every edge app must be enabled to receive its orchestration ID, to enable the embodiment of the invention.

This drawback can be omitted, if the edge apps B', D' modified according to the invention send requests to the edge-orchestrator E-ORC, which do not contain the orchestration ID, but for example an information which is uniquely related to the modified edge app B', D', like the app type.

This information transmission might be based on the W3C Thing Description and the IP- or MAC- address of the device it is deployed on. Using IP and W3C Thing Description are advantageous in such a manner that they have to be anyway part of the request from the app, so that the message for the request can be built right away in a manner known from the state-of-the-art request. Hence, an embodiment based on this information would reduce modifications to a minimum.

This embodiment is shown in the FIG where, as a first step, a request message R1' is built and sent according to the invention by the edge app CD', that needs a resource adjustment.

With such an embodiment as the edge-orchestrator knows, which instance of an app it has deployed on which device, and thus is modified according to the invention in such a manner, that it derives the orchestration ID from the IP address and app type.

In the FIG it is shown that as a result of this derivation according to the invention an acknowledge message E-ACK' is built and sent to the edge-device E-DEV and/or directly to the requesting edge app CD' in order to adjust the resources as requested.

As was said before, multiple instances of an app on one device are not possible currently. The advantage of this solution is, that it might be used by any app, but it has no negative effect on brownfield edge apps A, C, E, respectively the containerized instances CA, CC, CE, thereof which do not want to use it or are according to the depicted embodiment are not modified according to the invention and hence not having any knowledge of such solution.

In yet another embodiment the solution is further enhanced in such a manner that the edge-orchestrator E ORC providing the interface according to the invention as described in the last paragraph replies after deriving the orchestration ID with said ID back to the requesting containerized edge-applications CD'.

This would mean that the modified acknowledge message E-CON' depicted in the FIG is further enhanced by building a message not only adjusting the requested resources but also incorporating the derived ID so that it can transferred to the requesting edge app CD'.

With that, the app is enabled to identify itself for future requests and the step of derivation performed by the edge-orchestrator E-ORC subsequently no longer needed.

The invention is not limited to the embodiment mentioned. Any embodiment being characterized at least by an intent interface within the scope of the claims are possible, for example at least combinations of the embodiments or individual features of the above-mentioned embodiments are also within the scope of the claimed invention.

Especially if they are characterized to at least the following advantages and/or advantageous features:
With the invention edge apps E-APP get empowered to interact with the edge-orchestrator E-ORC which has deployed them. This among other advantages enables use cases, where the requirements of an app change during operation, e.g., when agent-based apps take over additional tasks, or when properties of an app get changed, e.g., reconfigured, during runtime.

Additionally, it empowers edge app E-APP to report any kind of issues to the edge-orchestrator, which enables the edge-orchestrator E-ORC to react on the issues in time, e.g., to make use of redundancies available in the edge environment and even redeploy the app to an edge-device E-DEV with more (available) computational power or with a better network connection.

Hence, the monolithic and rigid instantiation of industrial edge apps E-APP according to the state of the art is transformed into more dynamic and self-adjusting runtime environment.

The general approach of the invention - providing an identification of the orchestrated application with the orchestration-ID - achieves that by amending the state-of-the-art edge computing model where such orchestration-ID was only known by the edge entity which requests the orchestration of an edge app E-APP. With that, the app itself is in principle now able to request anything from the edge-orchestrator E-ORC.

Hence the invention is beneficial, especially if apps dynamically change their demands, e.g., an agent driven system taking over additional tasks. Furthermore, as the app itself is in the best place of detecting violations of resource guarantees it has requested, the management of resources can be performed most accurate and timely.

For example, it will detect without any or with very little additional effort, if it runs out of memory, if computational resources starve, or data received from a network arrive late and with allowing the application itself to provide this information to the edge-orchestrator E-ORC the orchestrator E-ORC and with this the system is enabled to react in time, e.g., to re-allocate the concerned app.

This invention at least offers a kind of an intent interface with which a containerized Edge App can request different resources than previously allocated during first instantiation or report any issues.

## Claims

1. A method for configuring nodes in a network, particularly an industrial network, by at least one controller, the method including the steps of:
- operating at least a part of said plurality of nodes in the network by a network management service, the network management service comprising an information and/or management model at least partly in compliance with the edge computing model, the network management service exchanging first configuration messages with the plurality of nodes; and
- configuring end-devices and/or applications on said end-devices instantiated according to said edge computing model at least amongst said part of nodes in the, particularly industrial, network by an edge-orchestrator service according to said edge computing model, the edge-orchestrator service exchanging second configuration messages with the plurality of nodes; and
- at least one of said applications being implemented and instantiated according to said edge computing model as a first application on a first end-device of the end-devices in such a manner that it interacts with the first end-device that it at least effects building, directly addressing and/or sending a message to said edge-orchestrator service, whereby said message is built in such a manner that at least a first message part is incorporated, whereby first message part comprises at least one information that is uniquely correlated with the first application; and
- sending and proceeding of the message to said edge-orchestrator; and
- said edge-orchestrator service processing the message in such a manner that a subsequent action in connection with the first application is taken.

2. The method according to claim 1, wherein a second message part is incorporated being at least a first control message.

3. The method according to claim 1, wherein said subsequent action being triggered by said processing of the message.

4. The method according to claim 2, said first control message being built as a request for resource adaption.

5. The method according to claim 2, said first control message being built as a report, especially containing a status, updates of at least one parameter and/or an event, provided from the first application.

6. The method according to claim 1, the at least one information that is uniquely correlated, comprises at least two of
- address of the device, for example a MAC address and/or an IP address
- a piece of information correlating with the type of application, especially the W3C Thing Description of the application.

7. The method according to claim 1, whereby from said information a unique ID for the first application is derived in such a manner that the subsequent action, especially adjusting resources for or extraction reports related to the first application, is processed using the ID.

8. The method according to claim 1, whereby the upon instantiation of the first application an ID unique within the network is generated and the application is provided with it in such a manner that the first application is subsequently able to incorporate the ID as the first information.

9. The method according to claim 8, whereby the edge-orchestrator or edge-device generates and provides said ID within the network.

10. The method according to claim 1, wherein said subsequent action comprises at least the edge-orchestrator service sending a message in such a manner that the first application is subsequently able to incorporate the ID as the first information when building further messages.

11. The method according to claim 1, wherein operating the edge computing model based network configuration includes establishing the edge computing model based network configuration and/or modifying the edge computing model based network configuration during a runtime of the network management service.

12. A controller for configuring nodes in a network, particularly an industrial network, the controller including at least one of:
- a network management service module operating at least a part of said plurality of nodes in the network by, the network management service module comprising an information and/or management model at least partly in compliance with the edge computing model, the network management service module exchanging first configuration messages with the plurality of nodes; and
- a configuration module configuring end-devices and/or applications on said end-devices instantiated according to said edge computing model at least amongst said part of nodes in the, particularly industrial, network by an edge-orchestrator service module according to said edge computing model, the edge-orchestrator service module exchanging second configuration messages with the plurality of nodes; and
- an end-device module implementing at least one of said applications and instantiating according to said edge computing model as a first application on a first end-device of the end-devices in such a manner that it interacts with the first end-device that it at least effects building, directly addressing and/or sending a message to said edge-orchestrator service module, whereby said message is built in such a manner that at least a first message part is incorporated, whereby first message part comprises at least one information that is uniquely correlated with the first application; and
- said end-device module sending and proceeding of the message to said edge-orchestrator service module; and
- said edge-orchestrator service module processing the message in such a manner that a subsequent action in connection with the first application is taken.

13. A network node in a network, particularly an industrial network, is disclosed, the node being controllable by at least one network controller according to claim 9, the node being built and operated according to the method in claims 1 to 8, particularly including one of:
- an end-device module for building and sending messages to said edge-orchestrator service module, which are at least incorporating said information, the end-device module implementing at least one of said applications and instantiating according to said edge computing model as a first application on the first end-device of the end-devices in such a manner that it interacts with the first end-device module that it at least effects building, directly addressing and/or sending a message to said edge-orchestrator service module, whereby said message is built in such a manner that at least a first message part is incorporated, whereby first message part comprises at least one information that is uniquely correlated with the first application; said end-device module sending and proceeding of the message to said edge-orchestrator service module;
- an edge-orchestrator service module processing the message in such a manner that a subsequent action in connection with the first application is taken.
